# EUROPÄISCHE PATENTANMELDUNG

(11) **EP 0 985 923 A2**
(43) Veröffentlichungstag der Anmeldung: **15.03.2000**
(21) Anmeldenummer: 99117072.1
(22) Anmeldetag: 31.08.1999
(51) Int. Cl.: G01N 21/70

(54) **Verfahren zur Erfassung von Tribolumineszenz und dessen Verwendung**

(30) Priorität: 10.09.1998 DE 19841400
(71) Anmelder: Beiersdorf Aktiengesellschaft, 20245 Hamburg (DE)
(72) Erfinder: Mei, Weiping, Dr., 20245 Hamburg (DE); Sauermann, Gerhard, Dr., 24649 Wiemersdorf (DE)

(57) **Zusammenfassung**

Gegenstand der Erfindung ist ein Verfahren zur Tribolumineszenzmessung, dadurch gekennzeichnet, daß die durch Oberflächenkontakt an Haut oder Hautanhangsgebilden hervorgerufene ultraschwache Photonenemission (UPE) erfaßt und gemessen wird.

## Beschreibung

Gegenstand der Erfindung sind insbesondere ein Verfahren zur Erfassung von ultraschwacher Photonenemission (im folgenden auch 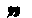 UPE" genannt) der Haut und der Haare bei der Reibung oder nach der Reibung an Oberflächen und z.B. die Verwendung dieses Verfahrens für Hautuntersuchungen.

Die physikalischen Prozesse der reibungsbedingten Energiedissipation sind sehr komplex. Neben der Weiterleitung der Reibungswärme und reibungsbedingter mechanischer Schwingungen über Objekt und Stoffe, die mit den unmittelbaren Reibkörpern verbunden sind, findet eine Energieabsorption und eine Energieemission statt.
Eine mögliche Reibungselektrizität, d.h. die Erzeugung und Weiterleitung elektrischer Ladung durch Reibungsprozesse sind für eine reibungsinduzierte Energieemission besonders die Vorgänge der reibungsbedingten Schallemission, einer Photonenemission (Tribolumineszenz) und einer Ionen- und Elektronenemission von Bedeutung. Mit Tribolumineszenz (griech.: tribein = reiben) wird allgemein die Emission optischer Strahlung infolge von Reibungsprozessen bezeichnet, die bei Temperaturen weit unterhalb des Einsetzens einer thermisch bedingten Emission auftreten kann.

Die physikalische Deutung der Tribolumineszenz geht davon aus, daß durch reibungsinduzierte mechanische Aktivierung eine Anregung von Elektronen der Oberflächenatome erfolgt. Durch Rekombinationsprozesse können die Elektronen wieder in den Grundzustand überführt werden, wobei optische Strahlung beschrieben als Tribolumineszenz emittiert wird. Diese Strahlungsemission erfolgt während des Reibungsvorganges spontan. Weitere Emissionen erfolgen verzögert nach Beendigung des Reibungsvorganges. Die verzögert emittierte Tribolumineszenz ist vermutlich eine Folge reibungsinduzierter oxidativer Prozesse.

Der größte Teil der Hautoberfläche steht in reibendem Kontakt mit anderer Haut und mit Textilien. Dabei kann es zu hohen Potentialen kommen, wie die beim Entkleiden im Dunkeln oft zu beobachtenden und hörbaren Entladungen beweisen. Dies ist insbesondere bei niedriger Luftfeuchte, bei Tragen von Textilien aus Kunstfaser und trockener Haut zu beobachten. Derartige spontane Entladungen können zumindest Hornschicht und Haar schädigen. Die Bildung von transienten Poren in Membranen und eine bleibende Permeabilitätserhöhung der Hornschicht nach Einwirkung von extrem kurzen Stromstößen ist beschrieben worden.

Die Ursache für die verzögert emittierte Strahlung sind die nach Kontakt und Trennung unterschiedlicher Oberflächen auftretende Ladungstrennung und die dadurch ausgelösten, sich anschließenden chemische Reaktionen, die nach oxidativen Prozessen (O₂-haltige Atmosphäre) zu angeregten, im sichtbaren Spektralbereich emittierenden Triplettzuständen von Spaltprodukten führen.

Bisherige tribologische Untersuchungen der Haut erfordern einen längeren Zeitraum und eine exzessive Beanspruchung oder eine Häufung von Schäden, weil die dann üblicherweise angewandte physiko-chemische Analytik dieser Spuren sehr schwierig ist. Die als Folge der Ladungstrennung ablaufenden chemischen Reaktionen können mit analytischen Methoden nicht oder nur mit großen Schwierigkeiten erfaßt werden, weil die Empfindlichkeit der in Frage kommenden Verfahren nicht ausreicht. Aus diesen Gründen muß der auslösende Prozeß häufig durchgeführt werden. Das Gesamtergebnis spiegelt vermutlich die Primärprozesse nur noch überschattet von Sekundärprozessen bzw. 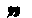 übertrieben" wieder. Außerdem wird der Primärprozeß durch Prozeßführung, Oberflächengestalt und molekulare Beschichtung determiniert.

Aufgabe der Erfindung ist es, ein einfaches Verfahren zur Erfassung von Tribolumineszenz zu schaffen, also die während und nach z.B. einer mechanischen Induktion, z.B. durch Reibung induzierte Tribolumineszenz insbesondere der Haut zu erfassen, und zwar vorzugsweise in vivo.

Erfindungsgemäß wird diese Aufgabe gelöst.

Gegenstand der Erfindung ist ein Verfahren zur Tribolumineszenzmessung, dadurch gekennzeichnet, daß die durch Oberflächenkontakt an Haut oder Hautanhangsgebilden hervorgerufene ultraschwache Photonenemission (im folgenden auch 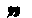 UPE" genannt), erfaßt und gemessen wird.

Die durch den Oberflächenkontakt bewirkte Ladungstrennung und die anschließende Ladungskombination führen direkt zu einer Photonenemission oder zu reaktiven Molekülspezies, deren weitere Reaktionen, z.B. auch noch nach dem Ende des Oberflächenkontaktes, beispielsweise in der Form von oxidativen Prozessen, z.B. in sauerstoffhaltiger Umgebung, insbesondere durch Peroxidation, unter Photonenemission abläuft.

Vorzugsweise wird diese durch reaktive Molekülspezies ausgelöste, verzögert emittierte Tribolumineszenz(UPE) oder diese nachfolgend emittierte Tribolumineszenz (UPE) erfaßt und gemessen.

Vorzugsweise wird erfindungsgemäß die an der Oberfläche oder die im Bereich der Oberfläche der Haut oder der Hautanhangsgebilde entstehende UPE erfaßt, insbesondere im Bereich von 250 bis 800 nm auftretende Emission.

Mit Haut oder Hautanhangsgebilde sind z.B. Haut, Haare oder Nägel des Menschen oder von Tieren gemeint, die in vivo oder in vitro vorliegen können, vorzugsweise in vivo.

Die Haut oder die Hautanhangsgebilde werden z.B. in Kontakt mit einer zweiten Oberfläche gebracht, beispielsweise ebenfalls mit Haut oder Hautanhangsgebilden oder z.B. aber Oberflächen anderer Materialien, insbesondere Textilien oder Geräten, die bei der Körperreinigung oder Körperpflege verwendet werden, oder aber Textilien der Bekleidung. Der Kontakt der gleichartigen oder verschiedenen Oberflächen kann durch Aufeinanderlegen, statisch (durch Anliegen) erfolgen, im Lösen des Kontaktes oder der Trennung der sich berührenden Oberflächen bestehen oder insbesondere durch Reibung der Oberflächen aneinander gebildet werden, wobei z.B. Berührungen und Trennungen beider Oberflächen oder Teilen davon aufeinander folgen können oder wechseln und über eine bestimmte Zeit der Kontakt unter Anwendung einer bestimmten Kraft oder eines bestimmten Druckes erfolgen kann.

Gegenstand der Erfindung ist auch die Verwendung des erfindungsgemäßen Verfahrens für die Charakterisierung der Untersuchung von Haut oder Hautanhangsgebilden bei Kontakt oder nach Kontakt mit Oberflächen, insbesondere zum Vergleich von verschiedenen Behandlungszuständen der Haut oder Hautanhangsgebilde oder zum Vergleich verschiedener Oberflächen. Nach dem Oberflächenkontakt wird die verzögert emittierte Tribolumineszenz erfaßt.

Insbesondere gelingt es, pathologische Abweichungen von normaler physiologischer Wechselwirkung zwischen Phasengrenzen, bzw. den beiden Oberflächen oder im Bereich dieser Oberflächen zu erfassen.

Beispielsweise erzeugt die Pflege oder Reinigung von Haut oder Haaren UPE. Verschiedene Reinigungsmittel oder Pflegemittel ergeben unterschiedliche UPE-Werte, da auch die Zustände dieser Oberflächen durch die Behandlung oder Vorbehandlung verschieden sind.

Insbesondere topische Zubereitungen (Kosmetika, Dermatologika) aber auch oral angewandte Wirkstoffe können in dieser Weise einfach hinsichtlich ihrer Wirkung auf Oberflächen getestet werden.

Vorteilhaft können so Reinigungs- oder Pflegeprodukte für empfindliche Haut oder Haare getestet werden.

Produkte mit stärkerer Pflegewirkung oder geringerer Reizwirkung zeigen eine geringere UPE z.B. bei oder nach Reibung.

In der Dermatologie können Produkte und Materialien auf ihr Allergiepotential oder z.B. im Hinblick auf Kontaktallergien getestet werden. Allergische Reaktionen oder Entzündungen sind mit erhöhter UPE verbunden. So hängt das Ausmaß von UPE von der Kontaktoberfläche, gegebenenfalls der reibenden Gegenfläche wie Haut, Textilien / Haar, Kamm, Bürste und gegebenenfalls der Vorbehandlung ab. Somit gestattet dieses Verfahren die Quantifizierung der Wechselwirkung Haut-Textilien oder Haar-Kamm und eine Abschätzung der Folgeprozesse.
Nicht nur die Verträglichkeit von Produkten an Haut und Haaren kann untersucht werden, sondern auch die Verträglichkeit von Materialien, die mit dem Körper in Berührung geraten, beispielsweise Textilien oder Kunststoffe (z.B. Synthetics, Folien), beispielsweise Bekleidung, Wäsche, Bettzeug oder medizinische Materialien, beispielsweise im Medical-Bereich (Pflaster, Bandagen, Folien, Stützstrümpfe, Orthesen), auch solche, die mit Selbstklebemassen versehen oder aber mit haftenden oder blockenden oder anderen Beschichtungen versehen sind. Selbstklebemassen können auf ihre Verträglichkeit getestet werden.

Gegenstand der Erfindung ist daher auch die Verwendung des erfindungsgemäßen Verfahrens für die Charakterisierung oder Untersuchung von Haut oder Hautanhangsgebilden, deren Oberflächen behandelt sein können, bei Kontakt oder nach Kontakt mit anderen Oberflächen, z.B. Geräten, die zur kosmetischen Behandlung dienen oder Oberflächen von Materialien, die mit der Oberfläche von Haut oder Hautanhangsgebilden in Berührung kommen, beispielsweise Textilien oder Kunststoffen wie Synthetics oder Folien, z.B. Bekleidung, Wäsche, Bettzeug oder medizinischen Materialien, die auch mit Ausrüstungen oder Beschichtungen versehen sein können.

Gegenstand der Erfindung ist daher auch die Verwendung zur Untersuchung oder Charakterisierung von z.B. anderen Oberflächen, die in Kontakt mit der Oberfläche von Haut oder Hautanhangsgebilden gebracht werden.

Bei Textilien oder Synthetics kann erfindungsgemäß die Ausrüstung oder Avivage dieser Stoffe oder die Färbung untersucht werden oder aber die durch Waschen und Reinigen (Waschmittel, Weichspüler, Appretur) entstandenen Einflüsse auf die Oberfläche und die Auswirkungen auf Haut und Haare.

Gegenstand der Erfindung ist auch eine Vorrichtung, die die Ausführung des vorstehenden Verfahrens gestattet.

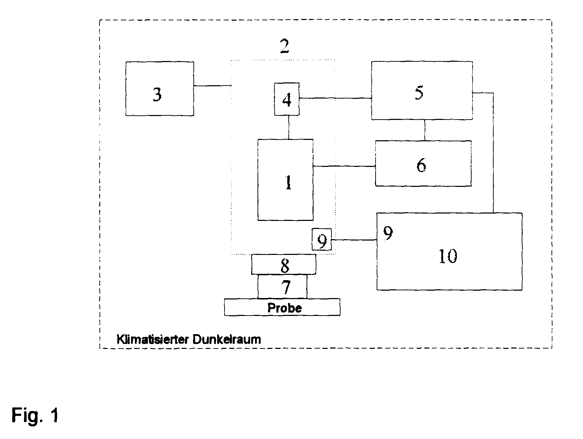

Ein Schema ist in Fig. 1 abgebildet.

Meßsystemaufbau für Tribolumineszenzmessungen:
- ein gekühlter Photomultiplier 1 (Modell 9558QA mit speziell ausgewähltem niedrigen Dunkelrauschen von weniger als 15 counts/s bei -30°C, Fa. Electron Tubes Ltd. UK) in einem Kühlgehäuse 2 (LCT50 mit Quarzfenster, Fa. Electron Tubes Ltd.), verbunden mit einer Umlaufkühler 3 (Model FC600, Fa. Julabo Labortechnik GmbH, Seelbach, D);
- Vorverstärker 4 (Fast Preamplifier Model 9301, Fa. EG&G Otec, München, D);
- Diskriminator 5 (Tri-Mode Diskriminator Model 6930, Phillips Scientific, Ramsey, NJ, USA);
- Hochspannungsgerät 6 (PM28B, Fa. Electron Tubes Ltd.) und weitere Spannungsversorgung für 4 und 5;
- Mechanischer Verschluß 7 (PR305, Fa. Electron Tubes Ltd.), und ein per Computer steuerbarer elektromagnetischer Verschluß 8 mit Software;
- Signalgeber 9, steuerbar per Computer für Reibungsbeginn, Reibungsende und Beginn der Messung;
- Vielkanalzählungsspeicherkarte MCS-II mit Software zum Erfassen der Messdaten (Eurisys Messtechnik GmbH, Mainz) und Computer 10.

Die zu vermessende Oberfläche bzw. Probe oder der Proband befinden sich unter dem mechanischen Verschluß 7. Die gesamte Messeinrichtung und Probe werden vorzugsweise in einem klimatisierten Dunkelraum untergebracht.

Für die Messung werden beispielsweise nach einigen Minuten Adaption eine unbehandelte und danach eine z. B. mit einem Pflegeprodukt behandelte Handoberfläche für 10s mit einem Handtuch gerieben oder unbehandelte und z.B. mit einem Pflegeprodukt behandelte Haare werden 10s lang gekämmt.

Es wird die Intensität der UPE während und (verzögert) in der Zeit nach dem Reiben gemessen und aus den Intensitäten und dem Abklingen in der Zeit danach werden die Wirkungsstärken der Produkte bestimmt.

Durch Verwendung unterschiedlicher Tücher oder Bürsten werden die Eigenschaften der Materialoberflächen ermittelt.

Es wurde festgestellt, daß die Trockenheit der Haut (z.B. abhängig von unterschiedlichen Produktanwendungen) ein sehr wichtiger Faktor bei der Tribolumineszenz und UPE-Bildung ist. So führt trockene Haut oder sensible Haut zu erhöhter Tribolumineszenz.

## Patentansprüche

1. Verfahren zur Tribolumineszenzmessung, dadurch gekennzeichnet, daß die durch Oberflächenkontakt an Haut oder Hautanhangsgebilden hervorgerufene ultraschwache Photonenemission (UPE) erfaßt und gemessen wird.

2. Verfahren gemäß Anspruch 1, dadurch gekennzeichnet, daß die verzögert emittierte UPE erfaßt und gemessen wird.

3. Verfahren gemäß Anspruch 1 oder 2, dadurch gekennzeichnet, daß die UPE im Bereich von 250- 800nm erfaßt wird.

4. Verwendung des Verfahrens gemäß den Ansprüchen 1-3 für die Charakterisierung oder Untersuchung von Haut oder Hautanhangsgebilden bei Kontakt oder nach Kontakt mit Oberflächen.

5. Verwendung der Verfahrens genäß Anspruch 4 für die Charakterisierung oder Untersuchung von Haut oder Hautanhangsgebilden, deren Oberflächen behandelt sein können, bei Kontakt oder nach Kontakt mit anderen Oberflächen, z.B. Geräten, die zur kosmetischen Behandlung dienen oder Oberflächen von Materialien, die mit der Oberfläche von Haut oder Hautanhangsgebilden in Berührung kommen, beispielsweise Textilien oder Kunststoffen wie Synthetics oder Folien, z.B. Bekleidung, Wäsche, Bettzeug oder medizinischen Materialien, die auch mit Ausrüstungen oder Beschichtungen versehen sein können.

6. Verwendung des Verfahrens gemäß Anspruch 4 zur Untersuchung oder Charakterisierung von Oberflächen, die in Kontakt mit der Oberfläche von Haut oder Hautanhangsgebilden gebracht werden.
